# EUROPEAN PATENT APPLICATION

(11) **EP 4 606 704 A1**
(43) Date of publication of application: **27.08.2025**
(21) Application number: 24315056.2
(22) Date of filing: 23.02.2024
(51) Int. Cl.: B64D 11/06, B64C 27/00

(54) **A SEAT BEAM FOR A ROTARY-WING AIRCRAFT ADAPTED FOR RECEIVING SEAT POSTS OF A SEAT BENCH DEVICE**

(71) Applicant: AIRBUS HELICOPTERS DEUTSCHLAND GmbH, 86609 Donauwörth (DE); Airbus Helicopters, 13725 Marignane Cedex (FR)
(72) Inventor: Fink, Axel, 86609 Donauwörth (DE); Joly, Philippe, 13510 Eguilles (FR)
(74) Representative: GPI Brevets

(57) **Abstract**

The present technology relates to a seat beam (161) for a rotary-wing aircraft adapted for receiving seat posts of a seat bench device, including a first seat beam end (210); a second seat beam end (220); and a seat beam body (360) connecting both. A link (330) with a link working line is arranged at the first seat beam end (210) and includes: a link-beam fixation (335) that is attached to the seat beam body (360) and rotatable around a first link rotational axis that is perpendicular to the seat beam extension axis, and a first seat beam fixation (240) that is connected to the link-beam fixation (335) and adapted for being attached to the airframe attachment point such that the first seat beam fixation (240) is rotatable around a second link rotational axis that is parallel to the first link rotational axis.

## Description

The present technology relates to a seat beam for a rotary-wing aircraft adapted for receiving seat posts of a seat bench device. The present technology also relates to a seat bench device for a rotary-wing aircraft comprising such a seat beam. The present technology further relates to a rotary-wing aircraft comprising such a seat bench device.

Aircrafts, and in particular rotary-wing aircrafts, are equipped with seat bench devices having seat bench components that are adapted for providing a plurality of seats for passengers of the aircraft. In the context of the present invention, the term "passenger" designates any person that is transported on board of the aircraft and, thus, supposed to occupy a seat in the aircraft. Therefore, such passengers are also referred to as the "occupants" of the seat bench components, i.e. as the "seat bench occupants".

Sometimes, it is desirable that such seat bench devices can be installed and removed based on the operational requirements of the rotary-wing aircraft. For example, in military use, seat bench devices, which are sometimes also referred to as "troop seats", are often installed for transporting troops and removed to make space for additional equipment.

Some seat bench devices are directly connecting lower attachment points to the airframe floor and upper attachment points to the airframe upper deck. Such a seat bench device is e.g. described in the document EP 3 124 382 B1. However, due to the complex structural and systemic arrangement of the airframe upper deck, the available allocation of hard fixation points for the seat attachment are strongly limited. Furthermore, the pass-throughs on the lining, segregating the inner cabin to the upper shell, have to be set to a minimum.

Other seat bench devices have upper attachment points secured to a transverse beam which extends from one lateral side of the cabin to the other lateral side of the cabin.

Typically, such a transverse beam, which is often made from extruded aluminum profiles, is attached to airframe fittings at lateral portions of the fuselage by means of simple pin lugs, whereby the airframe fittings are usually implemented as pins that are conveniently oriented in a vertical direction along a vertical axis (i.e., z-axis) of the rotary-wing aircraft.

However, such a rigid attachment principle for the transverse beam is over-constrained and leads to several risks and issues such as tolerance issues and mechanical issues that need to be overcome.

Production tolerances of both the transverse beam length and the airframe fixation elements can strongly affect the installation capability of the beam, which would require adjustment capabilities. These can be quite complicated especially for beams with rotational asymmetrical sections and with specific allocations of systemic fixation points, hence requiring re-adjustment each time the beam is changed from one rotary-wing aircraft to the other, representing a lack of direct interchangeability.

Furthermore, due to the rigid and constraining fixation of the lateral portions of the airframe, the beam affects the overall elastic and dynamic behavior of the rotary-wing aircraft. In turn, the beam can negatively affect the airframe's behavior e.g. in a crash scenario with unpredicted interactions. For instance, large deformations of the beams in a crash scenario can create antagonistic axial loads (membrane effect) at each end fixations, which require additional structural reinforcements.

Some transverse beams can be adjusted in length. Such transverse beams with length adjustment capabilities have a screwed end-fitting. However, such a screwed end-fitting penalizes the cost-efficiency of the transverse beam and requires un-screwing and screwing for length adjustment during installation, which in turn may require specific tooling.

In view of the above drawbacks, it is desirable to provide a tolerance-insensitive transverse beam that is easy to be installed by the operator, unsusceptible to positioning inaccuracies and thermal expansions and capable for direct interchangeability without re-adjustment. Furthermore, it is desirable that such a transverse beam does not affect the airframe's elastic and dynamic behavior.

It is, therefore, an objective of the present invention to provide a new seat beam for a rotary-wing aircraft that is adapted for receiving seat posts of a seat bench device and has an improved interchangeability as well as improved mechanical, operational, and handling properties. The objective is solved by the seat beam comprising the features of claim 1.

More specifically, such a seat beam for a rotary-wing aircraft adapted for receiving seat posts of a seat bench device comprises a first seat beam end, a second seat beam end, and a seat beam body. The first seat beam end is for attaching the seat beam to a first airframe attachment point of the rotary-wing aircraft. The second seat beam end is for attaching the seat beam to a second airframe attachment point of the rotary-wing aircraft. The seat beam body connects the first seat beam end and the second seat beam end along a seat beam extension axis. A link with a link working line is arranged at the first seat beam end. The link comprises a link-beam fixation and a first seat beam fixation. The link-beam fixation is attached to the seat beam body and rotatable around a first link rotational axis that is perpendicular to the seat beam extension axis. The first seat beam fixation is connected to the link-beam fixation and adapted for being attached to the first airframe attachment point such that the first seat beam fixation is rotatable around a second link rotational axis that is parallel to the first link rotational axis. The link working line is perpendicular to and passes through the first link rotational axis and the second link rotational axis.

Advantageously, the seat beam spans the lateral distance between one side and the other side of the rotary-wing aircraft, hence being attached to the fuselage at its both lateral extremities, i.e., the first seat beam end and the second seat beam end, at corresponding airframe fixation points, e.g., the first airframe attachment point and the second airframe attachment point on specific airframe fixation fittings.

A link such as a pendulum element is arranged at the first seat beam end and is essentially oriented perpendicular to the beam's extensional axis, i.e., a lateral axis or y-axis with reference to the rotary-wing aircraft's coordinates. Illustratively, the beam's extensional axis is defined by the centroidal axis of the beam's profile and advantageously matches with the imaginary connection line between the first airframe attachment point and the second airframe attachment point.

The link is essentially oriented in a longitudinal direction, i.e., along a longitudinal axis or x-axis with reference to the rotary-wing aircraft's coordinates. Advantageously, the link is oriented such that it is loaded in tension in the most demanding crash scenario so as to avoid any kinematic instabilities in the presence of large beam deformations.

Illustratively, the link features two ends, one first end, which incorporates the link-beam fixation, attached to the beam, and one second end, which incorporates the first seat beam fixation, attached to the airframe fixation point, which is sometimes referred to as an airframe attachment point, at the airframe's fixation fitting. An imaginary connection line between the two ends of the link through the link-beam fixation and the seat beam fixation defines a working line of the link, i.e., the link working line.

The first end of the link may include a lug with a first link rotational axis which is perpendicular to the beam's extensional axis and the link working line, and is essentially oriented in the vertical direction or z-axis with reference to the rotary-wing aircraft's global coordinates. The link is rotatable about the first link rotational axis with respect to the beam.

By way of example, the second end of the link (i.e., the seat beam fixation) preferably incorporates a spherical bearing with a second link rotational axis that is corresponding to the pin axis inserted into the spherical bearing. The second link rotational axis is parallel to the first link rotational axis. Advantageously, the spherical bearing allows the reaction of loads along the second link rotational axis and along the link working line, whilst all rotations remaining free.

If desired, a hinge such as a Cardan hinge may be arranged at the second seat beam end. The hinge allows for the reaction of loads in vertical direction, longitudinal direction, and transverse direction, as well as rotations about the vertical and lateral axes, but blocks rotations about the beam's extensional axis.

If desired, the hinge is attached to the beam at a first hinge end, which incorporates the hinge-beam fixation, and to the corresponding airframe fitting at a second hinge end, which incorporates the second seat beam fixation. The first end and the second end of the hinge are designed as pinned lugs with no spherical bearings. Illustratively, the first end of the hinge has a first hinge axis, and the second end of the hinge shows a second hinge axis. The first and second hinge axes are orthogonally arranged with respect to each other. The second hinge axis is preferably oriented in the vertical direction. Alternatively, the second hinge axis may be oriented in the longitudinal direction.

In some implementations, the fixation of the beam is purely isostatic, and therefore the fixation is not overdetermined. Longitudinal and vertical loads are reacted by both fixation points, whereas lateral loads as well as torsion moments (around the extensional axis of the beam) are reacted only by the second airframe attachment pointe of the hinge.

Since the fixation is not overdetermined, there is neither a dependency to misalignments of the beam's fixation points to the airframe (because of production and assembly tolerances), nor a dependency to thermal expansions.

Furthermore, the beam is easy to be installed without special needs of adjustments, repeated loosening or tightening connectors, and specific tooling. The beam represents a universal device which can be installed at any rotary-wing aircraft without the need of readjustments, and therefore, could provide an improved interchangeability, and could be installed by only one operator by hand.

Moreover, the beam is fully decoupled form the mechanical behavior of the airframe. Therefore, the beam does not affect the elastic deformation nor the dynamic behavior of the airframe. In turn, the airframe does not affect the mechanical function of the beam. Furthermore, the beam shows a rigid installation condition, which means that the beam is rigidly fixed upon installation and keeps a static position prior to the installation of the seats.

The beam fixation shows a high load bearing capability in the longitudinal direction and the lateral direction, which are the main nominal loading directions (e.g., sizing load cases: emergency landing and crash) of the beam. The beam and its fixations further ensure a certain amount of parasitic, second-order-load bearing capabilities, such as vertical (i.e., loads along the z-axis; the seat loads are actually reacted at the floor) and torsion moments about the beam's extensional axis (resulting from misalignments of the applied nominal load in the longitudinal direction relative to beam's centroidal axis). Furthermore, parasitic loads may arise as well during handling. Therefore, the beam must be capable to react loads in every direction targeting operational robustness, but at different levels of magnitude.

In some implementations, the position of the second end of the link and the second end of the hinge - or, correspondingly, the first and second beam-airframe fixation points - are aligned on the extensional (centroidal) axis of the beam, which means that the imaginary line connecting both distal points essentially matches the extensional line of the beam. This arrangement would provide the advantage of decoupling the bending and torsional behavior of the beam especially regarding vertical loadings.

If desired, the beam may integrate the end fixations for the link and hinge, whilst tailoring the sections for a maximization of its weight efficiency. Furthermore, the beam may use a cover sheet, i.e., a seat beam cover, and thus, the torsional stiffness about the beam's extensional axis is substantially increased whilst the handling quality of the beam is improved (e.g., no opened upper exposed pockets trapping mud or water, no risk to get accidentally stuck on the profile, etc.).

The beam may be a machined beam with the seat fixation points being essentially aligned to the centroidal axis of the beam's main section. If desired, the machined beam may have a double T-section with a top cover sheet providing for a closed area for increased torsional stiffness. Alternatively, the beam may be a closed rectangular extruded profile.

It should be noted that the beam is designed as a specific structural arrangement for a rotary-wing aircraft adapted for receiving a seat bench device. However, the concept can be applicable to any non-structural beam spanning the distance between one lateral side to the other lateral side of the airframe incorporating equipment fixations.

According to one aspect, the link-beam fixation of the link may further comprise a lug.

Preferably, the seat beam body may further comprise a fork-shaped end. The fork-shaped end has two prongs and is arranged at the first beam end. A hole is in each one of the two prongs of the fork-shaped end.

Preferably, the link-beam fixation may be positioned between the two prongs of the fork-shaped end such that the hole in each one of the two prongs of the fork-shaped end aligns with the lug.

Preferably, the link-beam fixation may further comprise a bolt. The bolt extends along the first link rotational axis through the hole in each one of the two prongs and the lug. The bolt may rotatably attach the link-beam fixation to the seat beam body.

According to one aspect, the link-beam fixation may be attached to the seat beam body such that the link working line is perpendicular to the seat beam extension axis.

According to one aspect, the first seat beam fixation may further comprise a spherical bearing. The spherical bearing is adapted for being rotatably attached to the first airframe attachment point.

According to one aspect, the seat beam may further comprise a hinge. The hinge is arranged at the second seat beam end.

Preferably, the hinge may further comprise a hinge-beam fixation. The hinge-beam fixation is attached to the seat beam body and is rotatable around a first hinge axis that is perpendicular to the seat beam extension axis.

Preferably, the hinge-beam fixation may surround the seat beam body at the second seat beam end on two sides. The hinge-beam fixation may further comprise an additional bolt. The additional bolt extends along the first hinge axis and rotatably attaches the hinge-beam fixation to the seat beam body.

Preferably, the hinge may further comprise a second seat beam fixation. The second seat beam fixation is connected to the hinge-beam fixation and adapted for being attached to the second airframe attachment point such that the second seat beam fixation is rotatable around a second hinge axis that is perpendicular to the first hinge axis.

According to one aspect, the seat beam body may have an H-shaped cross section.

Preferably, the seat beam may further comprise a seat beam cover. The seat beam cover extends along the seat beam extension axis and covers one side of the H-shaped cross section.

According to one aspect, the seat beam body may further comprise a rail for receiving the seat posts of the seat bench device.

The present technology further provides a seat bench device for a rotary-wing aircraft that comprises the seat beam described above, and a rotary-wing aircraft that comprises such a seat bench device.

Embodiments are outlined by way of example in the following description with reference to the attached drawings. In these attached drawings, identical or identically functioning components and elements are labeled with identical reference numbers and characters and are, consequently, only described once in the following description.
- Figure 1A is a side view of an illustrative rotary-wing aircraft with an illustrative seat bench device,
- Figure 1B is a view from below of the illustrative rotary-wing aircraft with the illustrative seat bench device of Figure 1A,
- Figure 2 is a perspective view of an illustrative seat bench device for a rotary-wing aircraft,
- Figure 3A is a perspective view of an illustrative seat beam for a rotary-wing aircraft observed from above the seat beam,
- Figure 3B is a perspective view of an illustrative seat beam for a rotary-wing aircraft observed from below the seat beam,
- Figure 4A is a top view of illustrative seat beam ends of the illustrative seat beam of Figure 3A,
- Figure 4B is a bottom view of illustrative seat beam ends of the illustrative seat beam of Figure 3B,
- Figure 5 is a perspective view of illustrative seat beam ends,
- Figure 6 is a perspective exploded view of an illustrative seat beam,
- Figure 7A is a top view of an illustrative seat beam without a seat beam cover to show the inside of the illustrative seat beam body,
- Figure 7B is a cross-sectional view of the illustrative seat beam body of Figure 7A with a seat beam cover intercepted along line A-A of Figure 7A, and
- Figure 7C is a cross-sectional view of the illustrative seat beam body of Figure 7A with a seat beam cover intercepted along line B-B of Figure 7A.

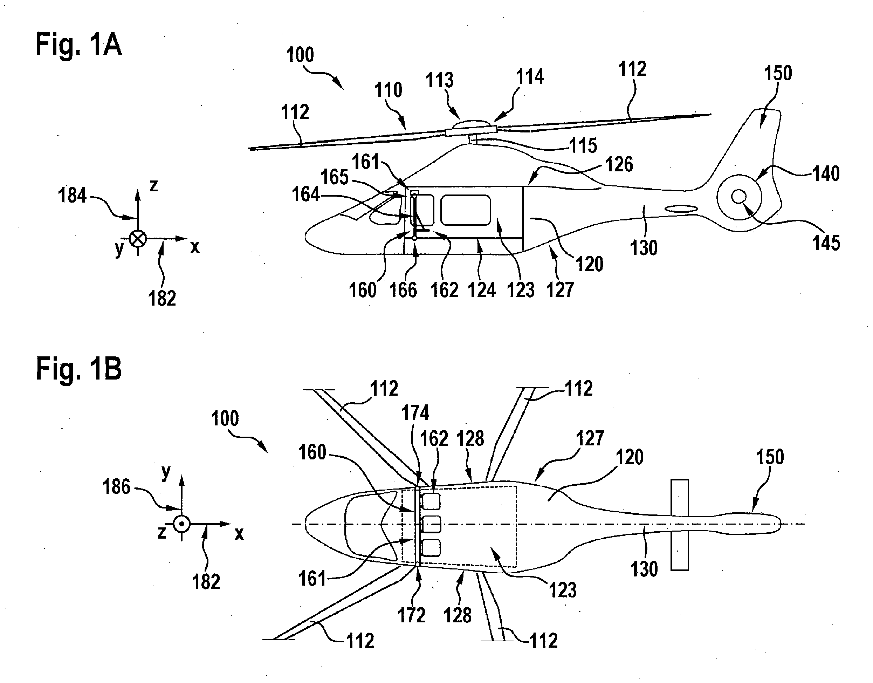

Figures 1A and 1B show an illustrative rotary-wing aircraft 100 having at least one main rotor 110. As shown in Figures 1A and 1B, the rotary-wing aircraft 100, which is sometimes also referred to as rotorcraft 100, is illustrated as a helicopter. Thus, for purposes of simplicity and clarity, the rotorcraft 100 may hereinafter be referred to as the "helicopter" 100.

Illustratively, the at least one main rotor 110 comprises a single multi-blade rotor which provides lift and forward or backward thrust during operation. The multi-blade rotor 110 comprises a plurality of rotor blades 112 that are mounted at an associated rotor head 114 with a rotor hub 113 to a rotor shaft 115, which rotates in operation of the helicopter 100 around an associated rotor axis.

Illustratively, helicopter 100 has a fuselage 120 that forms an airframe of the helicopter 100. The fuselage 120 defines a supporting structure that has illustratively an extension in length direction, an extension in width direction, and an extension in height direction. The length direction is along a longitudinal axis 182, which is illustratively indicated by an x-axis. The height direction is along a vertical axis 184 that is perpendicular to the longitudinal axis 182 and is illustratively indicated by a z-axis. The width direction is along a lateral axis 186 that is perpendicular to the longitudinal axis 182 and the vertical axis 184 and is illustratively indicated by a y-axis.

By way of example, the fuselage 120 may be connected to a suitable landing gear (not shown) and illustratively forms a front fuselage having a cabin 123 and a rear fuselage 127. The cabin 123 is inside the fuselage 120 and is delimited by side shells 128, an upper deck 126, and a cabin floor 124. Illustratively, the rear fuselage 127 is located at the rear part of the fuselage 120 and is connected to a tail boom 130.

By way of example, helicopter 100 includes at least one counter-torque device 140 configured to provide counter-torque during operation, i. e. to counter the torque created by rotation of the multi-blade rotor 110 for purposes of balancing the helicopter 100 in terms of yaw. The at least one counter-torque device 140 is illustratively provided at an aft section of the tail boom 130 and may have a tail rotor 145. If desired, the tail rotor 145 may be shrouded. The aft section of the tail boom 130 may further include a fin 150.

Illustratively, the helicopter 100 includes a seat bench device 160. The seat bench device 160 may be located in the front portion of the cabin 123. As shown in Figures 1A and 1B, the seat bench device 160 includes a seat beam 161. If desired, the seat beam 161 extends transversally from one side of the fuselage 120 to the other side of the fuselage 120 below the upper deck 126. The seat beam 161 is shown attached to airframe attachment points 172, 174.

If desired, the seat bench device 160 may include three seating surfaces 162 that are arranged along the y-axis 186. Each seating surface 162 may incorporate two vertical seat posts 164. Each seat post 164 may be attached to the cabin floor 124 at a seat post lower fixation 166 and to the seat beam 161 at a seat post upper fixation 165.

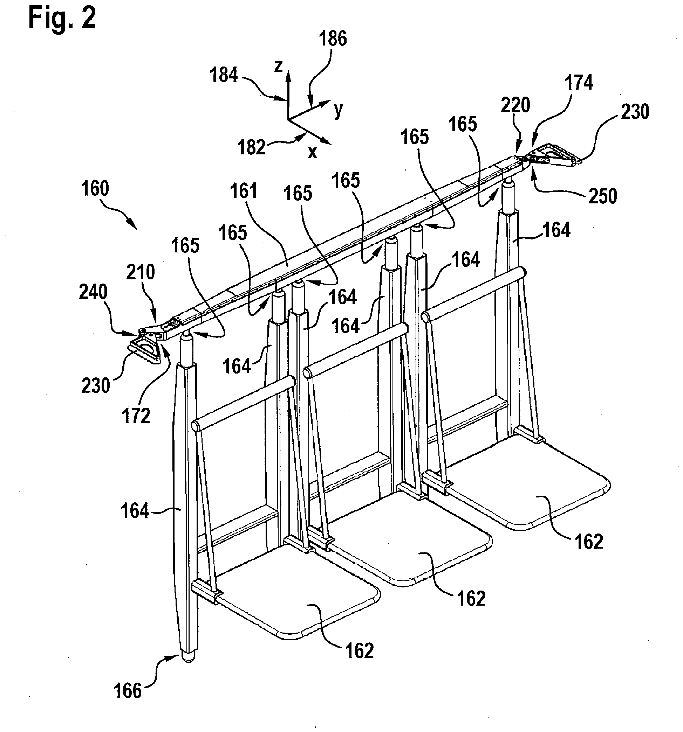

Figure 2 shows the seat bench device 160 with seat beam 161 and three seating surfaces 162 mounted thereto via seat posts 164. Each seat post 164 is shown attached to the seat beam 161 at its corresponding seat post upper fixation 165, while only one visible seat post 164 is shown with its corresponding seat post lower fixation 166.

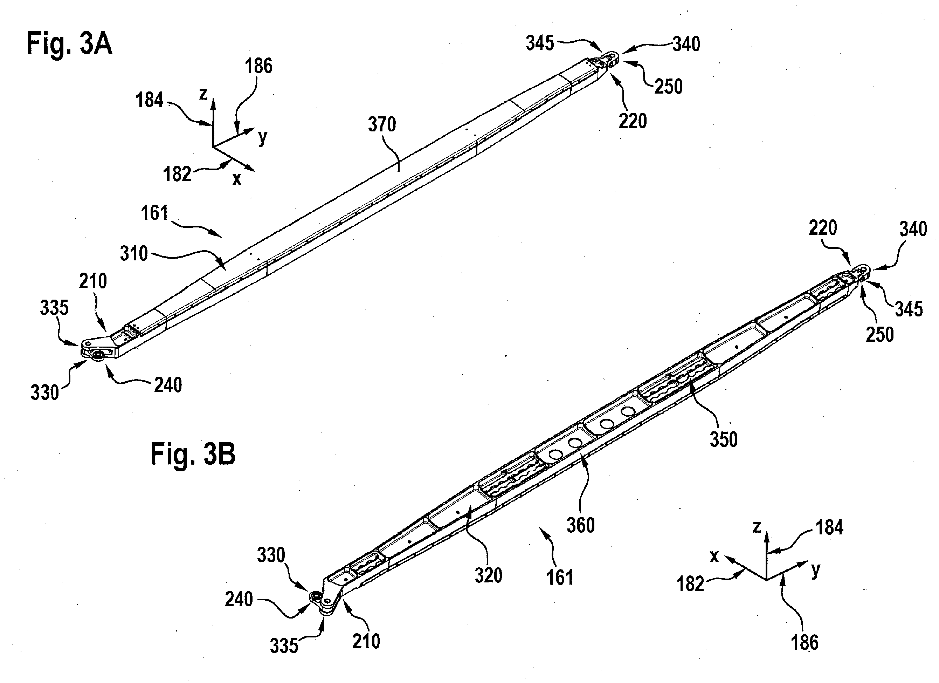

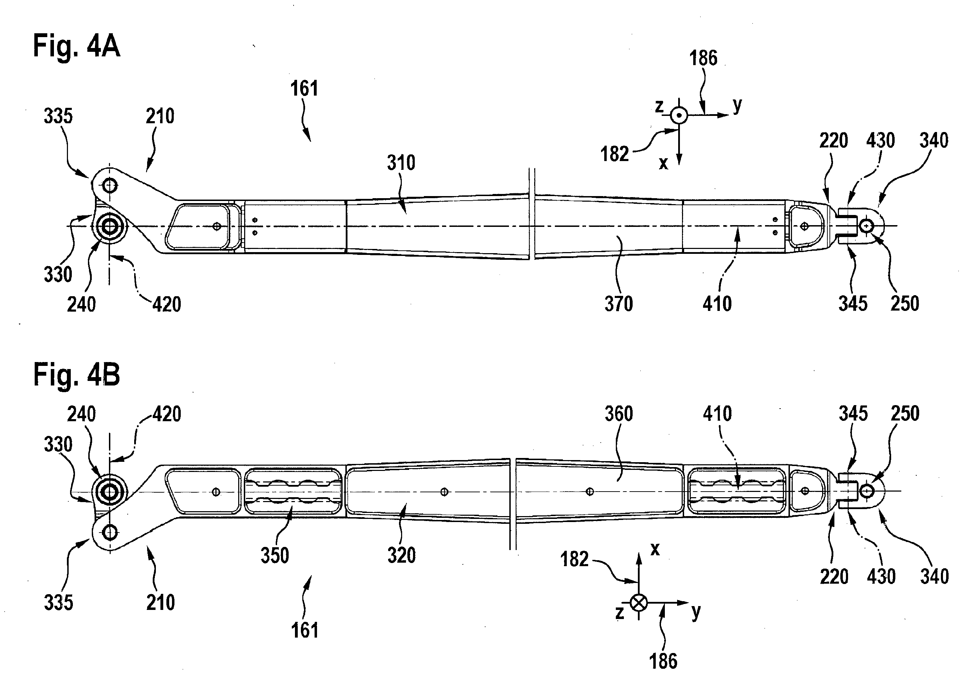

The seat beam 161 for the helicopter 100 is adapted for receiving seat posts 164 of the seat bench device 160. The seat beam 161 comprises a first seat beam end 210, a second seat beam end 220, and a seat beam body (360 in Figure 3B). The first seat beam end 210 is for attaching the seat beam 161 to a first airframe attachment point 172 of the helicopter 100. The second seat beam end 220 is for attaching the seat beam 161 to a second airframe attachment point 174 of the helicopter 100. The seat beam body connects the first seat beam end 210 and the second seat beam end 220 along a seat beam extension axis (410 in Figures 4A and 4B).

A link (330 in Figure 3) is arranged at the first seat beam end 210. The link includes a first seat beam fixation 240. The first seat beam fixation is adapted for being rotatably attached to the first airframe attachment point 172. Illustratively, a hinge may be arranged at the second seat beam end 220. The hinge may include a second seat beam fixation 250. Corresponding airframe fittings 230 which are attached to the fuselage 120 may be provided at the first and second airframe attachment points 172, 174 for receiving the first seat beam fixation 240 and the second seat beam fixation 250, respectively.

Figures 3A and 3B are perspective views of an illustrative seat beam 161 for a rotary-wing aircraft observed from above and from below the seat beam, respectively.

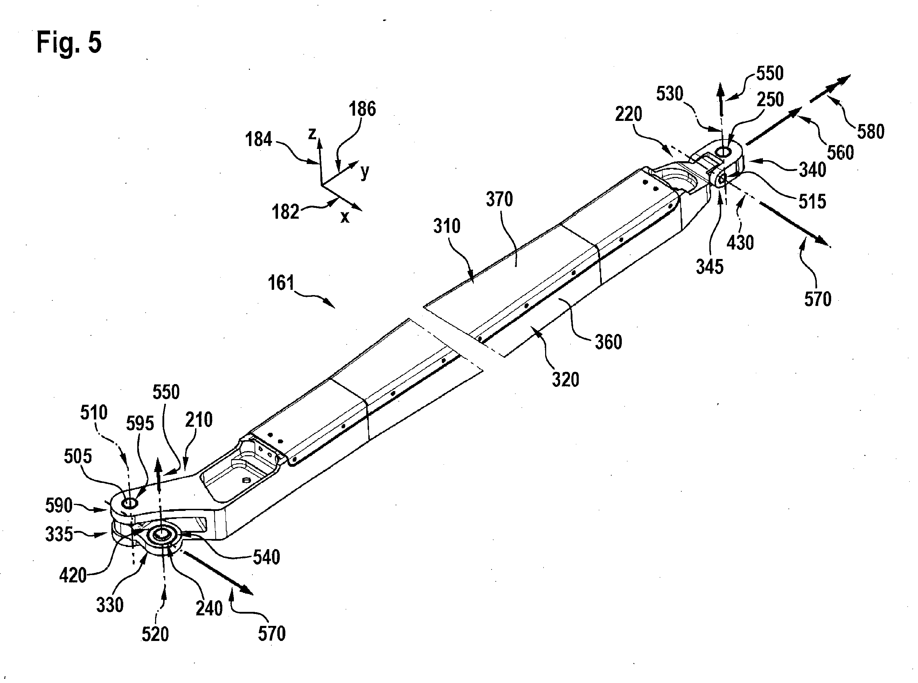

Illustratively, a seat beam upper side 310 is shown in Figure 3A and a seat beam lower side 320 is shown in Figure 3B. With reference to Figures 3A and 3B, a link 330 with a link working line (e.g., link working line 420 of Figures 4A and 4B) is arranged at the first seat beam end 210. The link 330 comprises a link-beam fixation 335 and the first seat beam fixation 240. The link-beam fixation 335 is attached to the seat beam body 360 and rotatable around a first link rotational axis (510 in Figure 5) that is perpendicular to the seat beam extension axis (e.g., seat beam extension axis 410 of Figure 4A and 4B).

Within the link 330 the first seat beam fixation 240 is hence interconnected to the link-beam fixation 335. It should be noted that the term "interconnected to" can mean "attached to" or "integrally formed". More specifically, the first seat beam fixation 240 may be attached to the link-beam fixation 335 or it may be integrally formed with the link-beam fixation 335 within the link 330. The link 330 may be oriented parallel to the longitudinal axis 182 so as to be loaded in tension as an effect of a longitudinal inertia load applied on the seat beam 161 in the worst load case scenario (e.g., a crash scenario).

Illustratively, the seat beam 161 may further include a hinge 340. The hinge 340 may be arranged at the second seat beam end 220. By way of example, the hinge 340 may include a hinge-beam fixation 345 that is attached to the seat beam body 360. The hinge-beam fixation 345 may be rotatable around a first hinge axis (e.g., hinge axis 430 of Figures 4A and 4B) that is perpendicular to the seat beam extension axis (e.g., seat beam extension axis 410 of Figures 4A and 4B).

As shown in Figures 3A and 3B, the seat beam 161 may include a second seat beam fixation 250. The second seat beam fixation 250 may be interconnected to the hinge-beam fixation 345 within the hinge 340, whereby the term "interconnected to" can mean "attached to" or "integrally formed" within the hinge 340. More specifically, the second seat beam fixation 250 may be attached to the hinge-beam fixation 345 or it may be integrally formed with the hinge-beam fixation 345 within the hinge 340. The second seat beam fixation 250 may be adapted for being rotatably attached to a second airframe attachment point (e.g., airframe attachment point 174 of Figure 1).

In some implementations, the seat beam 161 may include a seat beam cover 370. The seat beam cover 370 may extend along the seat beam extension axis 410 and cover one side of the seat beam body 360. If desired, the seat beam 161 may include a rail 350 for receiving the seat posts (e.g., seat posts 164 of Figure 2) of the seat bench device (e.g., seat bench device 160 of Figure 2). By way of example, the rail 350 may be used to attach the seat post upper fixation of the seat post.

Figures 4A and 4B show the seat beam 161 with the seat beam body 360 that connects the first seat beam end 210 and the second seat beam end 220 along the seat beam extension axis 410 observed from above and from below the seat beam, respectively. Note that the middle section of the seat beam body 360 has been omitted from Figures 4A and 4B to illustrate details of the first and second seat beam ends 210, 220.

Illustratively, link 330 with the link working line 420 is arranged at the first seat beam end 210. By way of example, the hinge-beam fixation 345 of the hinge 340 at the second seat beam end 220 is rotatable around the first hinge axis 430. Illustratively, the seat beam cover 370 is shown on the seat beam upper side 310 and the rail 350 is shown on the seat beam lower side 320.

Illustratively, the seat beam extensional axis 410 may correspond to the centroidal axis of the seat beam 161. As shown in Figures 4A and 4B, the link working line 420 of the link 330 may be defined as the connection line of the centroid (axis) of the link-beam fixation 335 and the centroid (axis) of the first seat beam fixation 240. In some implementations, the link working line 420 may be oriented perpendicular to the seat beam extensional axis 410.

Illustratively, the hinge 340 may include a hinge-beam fixation 345. The hinge-beam fixation 345 may be attached to the seat beam body 360 such that the hinge 340 is rotatable around the first hinge axis 430 relative to the seat beam body 360, whereby the first hinge axis 430 is perpendicular to the seat beam extensional axis 410.

Figure 5 is a perspective view of illustrative seat beam ends 210, 220. Illustratively, the seat beam 161 includes seat beam cover 370 that is mounted on the seat beam upper side 310 to the seat beam body 360.

A link 330 with a link working line 420 is arranged at the first seat beam end 210. The link 330 includes a link-beam fixation 335 and a first seat beam fixation 240. The link-beam fixation 335 is attached to the seat beam body 360 and rotatable around a first link rotational axis 510 that is perpendicular to the seat beam extension axis (e.g., seat beam extension axis 410 of Figures 4A and 4B).

The first seat beam fixation 240 is connected to the link-beam fixation 335 and adapted for being attached to the first airframe attachment point such that the first seat beam fixation 240 is rotatable around a second link rotational axis 520 that is parallel to the first link rotational axis 510, whereby the link working line 420 is perpendicular to and passes through the first link rotational axis 510 and the second link rotational axis 520.

Illustratively, a hinge 340 may be arranged at the second seat beam end 220. The hinge 340 may include a hinge-beam fixation 345 and a second seat beam fixation 250 that is connected to the hinge-beam fixation 345.

By way of example, the hinge-beam fixation may be attached to the seat beam body 360 rotatable around a first hinge axis 430 that is perpendicular to the seat beam extension axis (e.g., seat beam extension axis 410 of Figures 4A and 4B). If desired, the hinge-beam fixation 345 surrounds the seat beam body 360 at the second seat beam end 220 on two sides. Illustratively, the hinge-beam fixation 345 may include a bolt 515. The bolt 515 may extend along the first hinge axis 430 and rotatably attach the hinge-beam fixation 345 to the seat beam body 360.

Illustratively, the second seat beam fixation 250 may be adapted for being attached to the second airframe attachment point such that the second seat beam fixation 250 is rotatable around a second hinge axis 530 that is perpendicular to the first hinge axis 430.

As shown in Figure 5, the seat beam 161 has the load reaction capabilities which denote the pure isostatic fixation principle with six independent load reaction vectors.

The first and second link rotational axes 510, 520 are parallel to each other, and the link working line 420 passes through the first and second link rotational axes 510, 520.

Advantageously, the link 330 can respond to a vertical load 550 along the z-axis 184 and to a longitudinal load 570 along the x-axis 182 at the first seat beam fixation 240, whereby the longitudinal load 570 is in the direction of the link working line 420.

In some implementations, the first seat beam fixation 240 may include a spherical bearing 540 that is adapted for being rotatably attached to the first airframe attachment point. The spherical bearing 540 may keep rotations free.

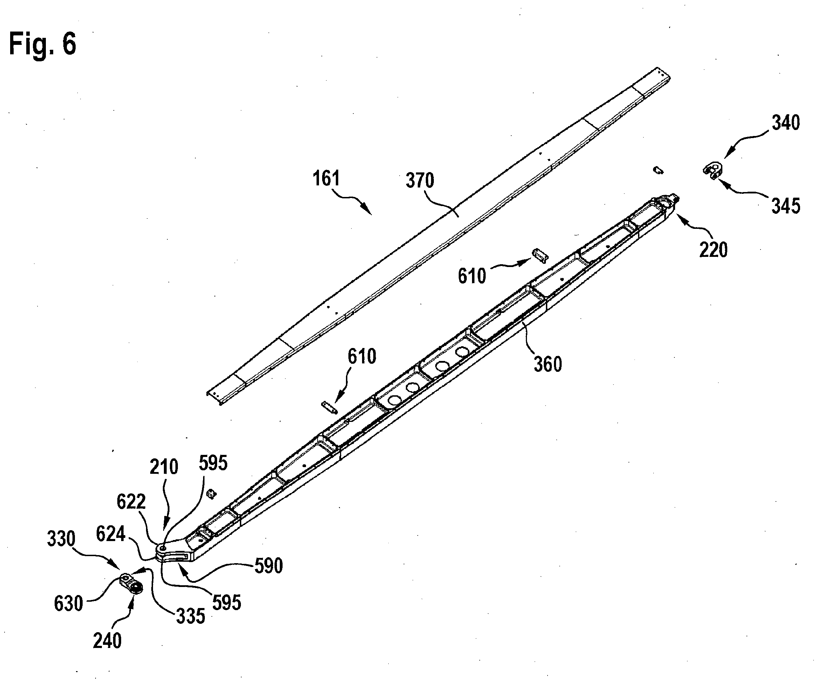

By way of example, the link-beam fixation 335 of the link 330 may include a lug (e.g., lug 630 of Figure 6). At the first beam end 210, the seat beam body 360 may include a fork-shaped end 590 with two prongs and a hole 595 in each one of the two prongs of the fork-shaped end 590. If desired, the seat beam 161 may further comprise a bolt 505.

Illustratively, the link-beam fixation 335 is positioned at least partially between the fork-shaped end 590 such that the holes 595 align with the lug. For example, the bolt 505 may extend along the first link rotational axis 510 through the holes 595 and the lug and may rotatably attach the link-beam fixation 335 to the seat beam body 360.

In some implementations, the hinge 340 at the second seat beam end 220 may include hinge-beam fixation 345 that is attached to the seat beam body 360 and rotatable around the first hinge axis 430. The hinge 340 may include second seat beam fixation 250 in addition to the hinge-beam fixation 345, and the second seat beam fixation 250 may be adapted for being rotatably attached around a second hinge axis 530 that is perpendicular to the first hinge axis 430.

Advantageously, the hinge 340 is able to transfer the vertical load 550, the longitudinal load 570, and a transverse load 560 that is along the y-axis 186 as well as a torsion moment 580 (i.e., the torsion moment about the seat beam extensional axis 410).

By way of example, the hinge 340 may be a Cardan hinge. The Cardan hinge 340 may work without spherical bearings. It should be noted that the nominal sizing load vectors correspond to the longitudinal load 570 and the transverse load 560, all other components are of minor magnitude.

In some implementations, the hinge-beam fixation 345 may surround the seat beam body 360 at the second seat beam end 220 on two sides. Illustratively, the hinge-beam fixation 345 may further include an additional bolt 515. The additional bolt 515 extends along the first hinge axis 430 and rotatably attaches the hinge-beam fixation 345 to the seat beam body 360.

Figure 6 shows the seat beam cover 370, the seat beam body 360, the link 330 having a lug 630, and the hinge 340 of the seat beam 161 in a disassembled condition.

As shown in Figure 6, the seat beam body 360 may comprise a fork-shaped end 590 with two prongs 622, 624 at the first beam end 210 and a hole 595 in each one of the two prongs 622, 624 of the fork-shaped end 590.

In some implementations, the link-beam fixation 335 may be positioned between the two prongs 622, 624 of the fork-shaped end 590 such that the hole 595 in each one of the two prongs 622, 624 of the fork-shaped end 590 aligns with the lug 630.

Illustratively, the bolt 505 may extend along the first link rotational axis (e.g., axis 510 of Figure 5) through the hole 595 in each one of the two prongs 622, 624 and the lug 630, thereby rotatably attaching the link-beam fixation 335 to the seat beam body 360.

By way of example, the seat beam body 360 may include a set of clips 610. The clips 610 may interconnect the seat beam body 360 with the seat beam cover 370. The enclosed area between the seat beam body 360 and the seat beam cover 370 may be used as torsion box providing for high torsional stiffness. For simplicity and clarity of the drawings, the bolts for interconnecting the seat beam body 360, the link 330, and the hinge 340 are not shown.

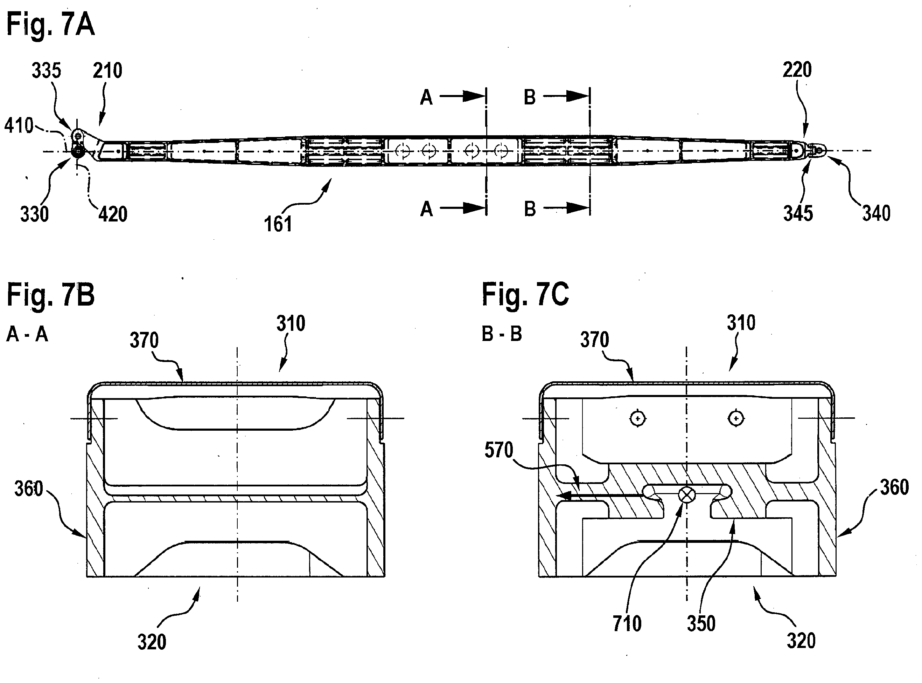

Figure 7A shows the seat beam 161, while Figures 7B and 7C show two cross sections at different positions of the seat beam body 360 being covered by the seat beam cover 370 at the seat beam upper side 310 and being open in the seat beam lower side 320.

As shown in Figures 7B and 7C, the seat beam body 360 of the seat beam 161 may have an H-shaped cross section. If desired, the seat beam cover 370 may extend along the seat beam extension axis 410 and cover one side of the H-shaped cross section of the seat beam body 360.

Preferably, the seat post upper fixation (e.g., seat post upper fixation 165 of Figure 1A) and the corresponding rail 350 may be designed so as to introduce the longitudinal load 570 well aligned to a shear center 710 of the entire cross section in order to avoid nominal torsional moments on the seat beam 161.

It should be noted that the above described embodiments are merely described to illustrate possible implementations, but not in order to restrict the present invention thereto. Instead, multiple modifications and variations of the above described embodiments are possible and should, therefore, also be considered as being part of the invention.

For instance, according to Figure 2, the seat bench device 160 includes three separate seating surfaces 162 that are arranged along the y-axis 186. However, the seat bench device 160 may alternatively include a bench with only one seating surface 162, two separate seating surfaces 162 or more than three separate seating surfaces 162.

Furthermore, according to Figure 5, the second hinge axis 530 is oriented in the vertical direction along the vertical axis 184. Nevertheless, if desired, the second hinge axis 530 may alternatively be oriented in the longitudinal direction along the longitudinal axis 182 with a first hinge axis 430 being then oriented in vertical direction.

Finally, according to Figures 7B and 7C, the seat beam body 360 has an H-shaped cross section with a seat beam cover 370 providing for a closed area for increased torsional stiffness. However, the seat beam 161 may alternatively have a closed rectangular extruded profile, if desired.

### Reference List

- 100: rotary-wing aircraft
- 110: multi-blade rotor
- 112: rotor blade
- 113: rotor hub
- 114: rotor head
- 115: rotor shaft
- 120: fuselage
- 123: cabin
- 124: cabin floor
- 126: upper deck
- 127: rear fuselage
- 128: side shell
- 130: tail boom
- 140: counter-torque device
- 145: tail rotor
- 150: fin
- 160: seat bench device
- 161: seat beam
- 162: seating surface
- 164: seat post
- 165: seat post upper fixation
- 166: seat post lower fixation
- 172: first airframe attachment point
- 174: second airframe attachment point
- 182: longitudinal axis (x-axis)
- 184: vertical axis (z-axis)
- 186: lateral axis (y-axis)
- 210: first seat beam end
- 220: second seat beam end
- 230: airframe fitting
- 240: first seat beam fixation
- 250: second seat beam fixation
- 310: seat beam upper side
- 320: seat beam lower side
- 330: link
- 335: link-beam fixation
- 340: hinge
- 345: hinge-beam fixation
- 350: rail
- 360: seat beam body
- 370: seat beam cover
- 410: seat beam extensional axis
- 420: link working line
- 430: first hinge axis
- 505: bolt
- 510: first link rotational axis
- 515: bolt
- 520: second link rotational axis
- 530: second hinge axis
- 540: spherical bearing
- 550: vertical load
- 560: transverse load
- 570: longitudinal load
- 580: torsion moment
- 590: fork-shaped end
- 595: hole
- 610: clips
- 622, 624: prong
- 630: lug
- 710: shear center

## Claims

1. A seat beam (161) for a rotary-wing aircraft (100) adapted for receiving seat posts (164) of a seat bench device (160), comprising:
a first seat beam end (210) for attaching the seat beam (161) to a first airframe attachment point (172) of the rotary-wing aircraft (100);
a second seat beam end (220) for attaching the seat beam (161) to a second airframe attachment point (174) of the rotary-wing aircraft (100); and
a seat beam body (360) that connects the first seat beam end (210) and the second seat beam end (220) along a seat beam extension axis (410);
**characterized in that**:
a link (330) with a link working line (420) is arranged at the first seat beam end (210) and comprises:
a link-beam fixation (335) that is attached to the seat beam body (360) and rotatable around a first link rotational axis (510) that is perpendicular to the seat beam extension axis (410), and
a first seat beam fixation (240) that is connected to the link-beam fixation (335) and adapted for being attached to the first airframe attachment point (172) such that the first seat beam fixation (240) is rotatable around a second link rotational axis (520) that is parallel to the first link rotational axis (510), wherein the link working line (420) is perpendicular to and passes through the first link rotational axis (510) and the second link rotational axis (520).

2. The seat beam (161) of claim 1, wherein the link-beam fixation (335) of the link (330) further comprises a lug (630).

3. The seat beam (161) of claim 2, wherein the seat beam body (360) further comprises:
a fork-shaped end (590) with two prongs (622, 624) at the first beam end (210); and
a hole (595) in each one of the two prongs (622, 624) of the fork-shaped end (590).

4. The seat beam (161) of claim 3, wherein the link-beam fixation (335) is positioned between the two prongs (622, 624) of the fork-shaped end (590) such that the hole (595) in each one of the two prongs (622, 624) of the fork-shaped end (590) aligns with the lug (630), further comprising:
a bolt '(505) that extends along the first link rotational axis (510) through the hole (595) in each one of the two prongs (622, 624) and the lug (630) and that rotatably attaches the link-beam fixation (335) to the seat beam body (360).

5. The seat beam (161) of any one of the preceding claims, wherein the link-beam fixation (335) is attached to the seat beam body (360) such that the link working line (420) is perpendicular to the seat beam extension axis (410).

6. The seat beam (161) of any one of the preceding claims, wherein the first seat beam fixation (240) further comprises:
a spherical bearing (540) adapted for being rotatably attached to the first airframe attachment point (172).

7. The seat beam (161) of any one of the preceding claims, further comprising:
a hinge (340) arranged at the second seat beam end (220).

8. The seat beam (161) of claim 7, wherein the hinge (340) further comprises:
a hinge-beam fixation (345) that is attached to the seat beam body (360) and rotatable around a first hinge axis (430) that is perpendicular to the seat beam extension axis (410).

9. The seat beam (161) of claim 8, wherein the hinge-beam fixation (345) surrounds the seat beam body (360) at the second seat beam end (220) on two sides, further comprising:
an additional bolt (515) that extends along the first hinge axis (430) and that rotatably attaches the hinge-beam fixation (345) to the seat beam body (360).

10. The seat beam (161) of any one of claims 7 to 9, wherein the hinge (340) further comprises:
a second seat beam fixation (250) that is connected to the hinge-beam fixation (345) and adapted for being attached to the second airframe attachment point (174) such that the second seat beam fixation (250) is rotatable around a second hinge axis (530) that is perpendicular to the first hinge axis (430).

11. The seat beam (161) of any one of the preceding claims, wherein the seat beam body (360) has an H-shaped cross section.

12. The seat beam (161) of claim 11, further comprising:
a seat beam cover (370) that extends along the seat beam extension axis (410) and covers one side of the H-shaped cross section.

13. The seat beam (161) of claim 1, wherein the seat beam body (360) further comprises:
a rail (350) for receiving the seat posts (164) of the seat bench device (160).

14. A seat bench device (160) for a rotary-wing aircraft (100) comprising the seat beam (161) of any one of the preceding claims.

15. A rotary-wing aircraft (100) comprising the seat bench device (160) of claim 14.
